# EUROPÄISCHE PATENTANMELDUNG

(11) **EP 0 653 521 A2**
(43) Veröffentlichungstag der Anmeldung: **17.05.1995**
(21) Anmeldenummer: 94117789.1
(22) Anmeldetag: 10.11.1994
(51) Int. Cl.: E03D 5/01, F04B 9/14, B60R 15/00, B63B 29/14

(54) **Toilette, insbesondere tragbare Toilette für Boote, Wohnwagen oder Reisemobile**

(30) Priorität: 11.11.1993 DE 9317303 U
(71) Anmelder: CAMPING GAZ INTERNATIONAL (DEUTSCHLAND) GMBH, D-65795 Hattersheim (DE)
(72) Erfinder: Baumgartner, Heinz, D-76275 Ettlingen (DE)
(74) Vertreter: Kern, Wolfgang, Dipl.-Ing.

(57) **Zusammenfassung**

Die Erfindung betrifft eine Toilette, insbesondere tragbare Toilette für Boote, Wohnwagen oder Reisemobile, mit einem beckenförmigen, eine Abflußöffnung aufweisenden Sitzteil einem Behälter mit Spülwasser zum Ausspülen des Sitzteils, der durch eine Abflußöffnung entleerbar ist, und einem unter dem Sitzteil befindlichen Aufnahmebehälter. Die Toilette weist eine Regeleinrichtung auf für eine an den Spülwasserbehälter oder den Sitzteil anschließbare Vorrichtung zum Fördern des Spülwassers aus dem Spülwasserbehälter in den Sitzteil auf Zwecks einfacherer und sicherer Handhabung der Pumpvorrichtung (1) soll diese als Kolbenpumpe (6) mit mehreren Kammern (7, 8) ausgebildet sein, von denen eine erste Kammer (7) mit dem Spülwasserbehälter (4) und dem Sitzteil sowie mit einer zweiten Kammer (8) verbunden ist.

## Beschreibung

Die Erfindung bezieht sich auf eine Toilette, insbesondere tragbare Toilette für Boote, Wohnwagen oder Reisemobile, nach dem Oberbegriff des Anspruchs 1.

Eine solche Toilette ist beispielsweise aus der US-A-3 570 018 bekannt. Die Pumpvorrichtung dieser Toilette ist als elastischer Balg ausgebildet, welcher im Normalzustand, d.h. in seiner Betriebsstellung, in seiner gesamten Länge von dem Gehäuse der Toilette absteht. Eine Toilette mit einer solchen Pumpvorrichtung ist insbesondere beim Ansaugen von Spülwasser aus dem Spülwasserbehälter umständlich handhabbar, da der Pumphub und die Pumpgeschwindigkeit vom Material des Balgs und dessen Elastizität abhängen. Ein Ansangen von den Innenraum des Balgs nur teilweise ausfüllenden Teilmengen an Spülwasser ist nur schwer möglich. Sobald der Balg losgelassen wird, wird durch die Elastizität des Materials automatisch weiteres Spülwasser angesaugt. Da sich der Balg im Normalzustand in seiner auseinandergezogenen Stellung befindet, können beim Transport der Toilette Schwierigkeiten entstehen, die zu einer Beschädigung und damit zu Löchern in der Pumpvorrichtung führen. Außerdem kann es bei der als Balg ausgebildeten Pumpvorrichtung nach deren häufiger Betätigung zu materialbedingten Undichtigkeiten kommen.

Der Erfindung liegt die Aufgabe zugrunde, eine Toilette der eingangs angegebenen Art zu schaffen, deren Pumpvorrichtung einfacher und sicherer handhabbar ist.

Diese Aufgabe wird durch eine Toilette mit den Merkmalen des Anspruchs 1 gelöst.

Vorteilhaft ist dabei insbesondere die Ausbildung der Pumpvorrichtung als Kolbenpumpe mit mehreren Kammern. Eine solche Pumpe ist sehr langlebig und betriebssicher, da auch nach häufiger Betätigung nahezu kein Verschleiß zu beobachten ist. Es ist ohne weiteres möglich, den Kolben der Pure ganz in die Vorrichtung einzuschieben und die Pumpvorrichtung lediglich im Bedarfsfall durch ein Herausziehen und Hereindrücken des Kolbens zu betätigen. In ihrer Ruhestellung ist also im vorerwähnten Fall der Kolben nahezu vollständig in die Pumpe eingefahren. Damit ist gewährleistet, daß die Oberseite der Pumpvorrichtung bündig mit dem Gehäuse der Toilette abschließen kann oder nur wenig über dieses vorsteht. Die Ausbildung der Kolbenpumpe mit mehreren Kammern ermöglicht, die Abzweigung der Leitung vom Spülwasserbehälter zum Sitzteil an der Pumpvorrichtung selbst vorzusehen. Dadurch entsteht eine sehr kompakte Pumpvorrichtung.

Vorteilhafterweise umgibt die erste Kammer der Kolbenpumpe die zweite, den Kolben der Pumpe aufnehmende Kammer konzentrisch unter Ausbildung eines Ringspalts. Diese Weiterbildung der Erfindung ermöglicht eine geringe Baugröße und trotzdem eine hohe Leistungsfähigkeit der Pumpe, so daß die Pumpvorrichtung an der Toilette letztlich nur einen geringen Platzbedarfhat.

Günstig ist ferner, daß die zweite Kammer in ihrem Boden eine Durchtrittsöffnung aufweist und daß der den Durchfluß zum Spülwasserbehälter freigebende oder sperrende eine Teil der Regeleinrichtung zwischen dem die Durchtrittsöffnung aufweisenden Boden der zweiten Kammer und demjenigen der ersten Kammer angeordnet ist. Dadurch kann bei einem Herausziehen des Kolbens das Spülwasser ohne Umlenkung direkt vom Spülwasserbehälter über den einen Teil der Regeleinrichtung in die zweite Kammer einströmen. Damit benötigt die erfindungsgemäß ausgebildete Pumpvorrichtung kurze Wege, so daß letztlich erhöhte Reibungsverluste verhindert und dadurch die Effektivität der Vorrichtung gesteigert ist. Die Anordnung des einen Teils der Regeleinrichtung innerhalb der ersten Kammer trägt mit zu der kompakten Bauweise des Erfindungsgegenstandes bei

Gemäß einer anderen Weiterbildung des Erdfindungsgegenstandes ist der den Durchfluß zum Sitzteil freigebende oder sperrende andere Teil der Regeleinrichtung in einem Anschlußstück vorgesehen, das mit dem, dem Boden der ersten Kammer gegenüberliegenden, freien Ende der Kammer verbunden ist. Damit ist eine Möglichkeit geschaffen, den anderen Teil der Regeleinrichtung zwecks Reinigung oder Wartung schnell und leicht zu erreichen. Dies kann vorzugsweise ohne eine Demontage der Pumpvorrichtung oder der Toilette erfolgen.

Vorteilhafterweise weist die Regeleinrichtung zwei Kugel-Rückschlagventile auf die derart angeordnet und ausgebildet sind, daß bei einem Auswärtshub des Kolbens das eine Ventil den Durchfluß zum Spülwasserbehälter freigibt und gleichzeitig das andere den Durchfluß zum Sitzteil sperrt und bei einem Einwärtshub des Kolbens das eine Ventil den Durchfluß zum Spülwasserbehälter sperrt und gleichzeitig das andere den Durchfluß zum Sitzteil freigibt. Derartige Rückschlagventile sind sehr betriebssicher und können auch im Fall von Ablagerungen in den Rohren noch sicher schließen. Sie bestehen zudem aus wenigen Teilen, was sich positiv auf das Gewicht und die Kosten der erfindungsgemäßen Toilette auswirkt. Außerdem ist, sollte dies nötig sein, ein Austausch der Kugeln ohne weiteres möglich, da diese nicht unmittelbar an einem Teil der Toilette befestigt sind.

Gemäß einer anderen Weiterbildung des Erfindungsgegenstandes sind die Kammern der Pumpvorrichtung zylindrisch ausgebildet, wobei die erste Kammer aufihrem freien Ende ein Außengewinde aufweist, auf das eine die zweite Kammer abdichtend mit der ersten Kammer verbindende Überwurfmutter aufschraubbar ist. Diese Ausbildung des Erfindungsgegenstandes ermöglicht eine schnelle Demontage der Pumpvorrichtung, so daß für Reinigungs- und/oder Wartungsarbeiten nur wenig Zeit benötigt wird. Da sich die Übewurfmutter am freien Ende der Pumpvorrichtung befindet, kann sie ohne weiteres von außen her zugänglich sein, so daß eine Demontage der Toilettte nicht erforderlich ist. Damit ist auch der eine Teil der Regeleinrichtung leicht zugänglich und kann deshalb schnell ausgewechselt, gereinigt oder gewartet werden.

Günstig ist ferner, daß das den anderen Teil der Regeleinrichtung aufweisende Anschlußstück ebenso wie die Überwurfmutter im montierten Zustand der Pumpvorrichtung außerhalb des Gehäuses der Toilette angeordnet sind. Dadurch wird die Handhabung der erfindungsgemäßen Toilette weiter verbessert. Auch der andere Teil der Regeleinrichtung ist leicht zugänglich.

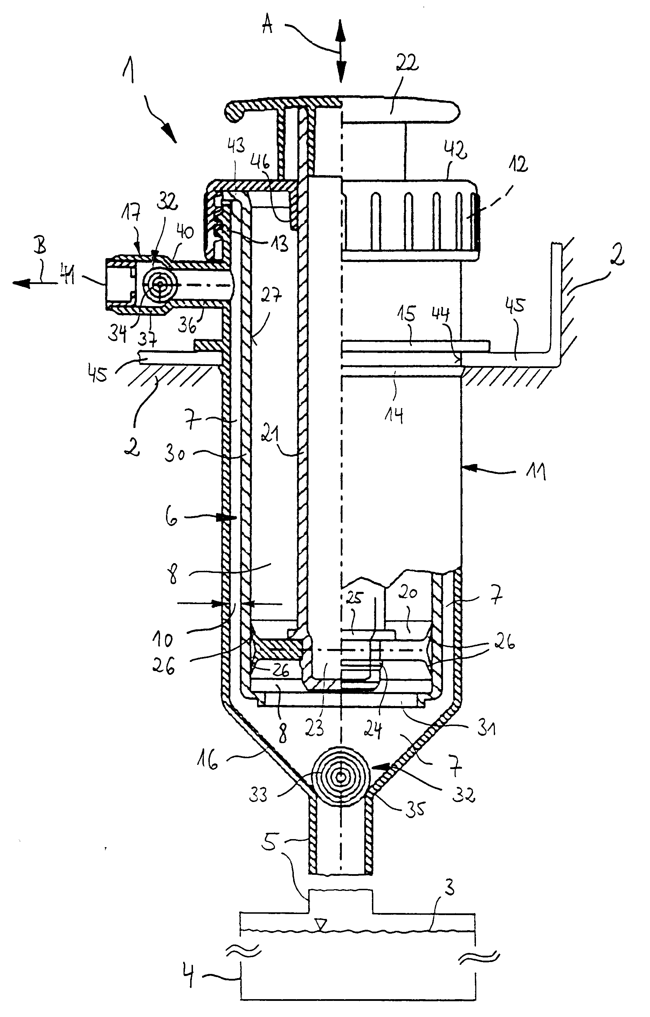

Ein Ausführungsbeispiel des Erfindungsgegenstandes wird nachfolgend anhand der Zeichnung näher erläutert, deren einzige Figur zeigt:
eine schematische, teilweise geschnitten dargestellte Ansicht einer Pumpvorrichtung für eine Toilette, insbesondere für eine tragbare Toilette.

In der einzigen Figur ist eine Pumpvorrichtung 1 einer bei 2 lediglich angedeuteten Toilette, insbesondere einer tragbaren Toilette für Boote, Wohnwagen oder Reisemobile, in einer teilweise geschnittenen Drauf- oder Seitenansicht schematisch dargestellt.

Die Toilette 2 weist einen beckenförmigen, eine Abflußöffnung (nicht gezeigt) aufweisenden Sitzteil (nicht dargestellt) sowie einen Spülwasser 3 zum Ausspülen des Sitzteils und dessen Entleerung durch die Abflußöffnung enthaltenden Behälter 4 auf

Der Spülwasserbehälter 4 ist der besseren Übersicht halber in der Figur verkleinert dargestellt und steht über die Spülwasserleitung 5 in unmittelbarer Verbindung mit der Pumpvorrichtung 1. Diese dient dazu, das Spülwasser 3 aus dem Spülwasserbehälter 4 iin den nicht gezeigten Sitzteil zu fördern.

Erfindungsgemäß weist die Pumpvorrichtung 1 eine Kolbenpumpe 6 mit zwei Kammern 7, 8 auf, von denen die erste mit dem Spülwasserbehälter 4 und dem nicht gezeigten Sitzteil sowie mit der zweiten Kammer 8 verbunden ist.

Gemäß der Figur umgibt die erste Kammer 7 der Kolbenpumpe 6 die zweite Kammer 8 konzentrisch unter Ausbildung eines Ringspalts 10. Die erste Kammer 7 weist einen zylindrischen Pumpenkörper 11 auf dessen freies Ende 12 mit einem Aüßengewinde 13, dessen Mittelteil mit einer umlaufenden Rastnase 14 sowie einem umlaufenden Anschlag 15 versehen und dessen Boden 16 konisch sich verengend ausgebildet ist. Zwischen seinem freien Ende 12 und dem Anschlag 15 weist der Pumpenkörper 11 ein Anschlußstück 17 auf mit dem ersterer mit dem nicht dargestellten Sitzteil verbunden ist.

Innerhalb der zylindrisch ausgebildeten zweiten Kammer 8 ist der in Form einer Ringmanschette ausgebildete Kolben 20 mit Hilfe einer Kolbenstange 21 in Richtung des Doppelpfeils A auf- und abbewegbar, wobei am freien Ende der Kolbenstange 21 ein Knopf 22 zum Betätigen der Pumpvorrichtung 1 angebracht ist. An seinem in der Figur unteren Ende 23 hat die Kolbenstange 21 ein umlaufendes Rastelement 24 sowie ein ebenfalls umlaufendes Anschlagelement 25. Der Kolben 20 ist zwischen dem Rastelement 24 und dem Anschlagelement 25 eingeklemmt und hat zwei einander gegenüberliegend angeordnete Dichtlippen 26, von denen die eine in der Figur nach oben und die andere in der Figur nach unten weist, die unter Vorspannung an der Innenwand 27 eines Pumpenzylinders 30 der zweiten Kammer 8 anliegen und längs der Innenwand bei einer Bewegung des Kolbens 20 durch die Kolbenstange 21 gleitend verschiebbar sind.

Im Boden ihres Pumpenzylinders 30 weist die zweite Kammer 8 eine Durchtrittsöffnung 31 auf deren Querschnittsfläche geringfügig kleiner als diejenige der zweiten Kammer ist.

Die Pumpvorrichtung 1 ist mittels einer Regeleinrichtung 32 wahlweise an den Spülwasserbehälter 4 oder an den nicht gezeigten Sitzteil der Toilette anschließbar. Gemäß der Figur weist die Regeleinrichtung 32 zwei Teile 33, 34 auf von denen der eine den Durchfluß zum Spülwasserbehälter 4 und der andere den Durchfluß zum nicht dirgestellten Sitzteil in Abhängigkeit einer Betätigung des in der zweiten Kammer 8 angeordneten Kolbens 20 freigibt oder sperrt. Der den Durchfluß zum Spülwasserbehälter 4 regelnde eine Teil 33 der Regeleinrichtung 32 ist zwischen dem die Durchtrittsöffnung 31 aufweisenden Boden der zweiten Kammer 8 und dem konisch ausgebildeten Boden 16 der ersten Kammer 7 angeordnet. Der den Durchfluß zum nicht gezeigten Sitzteil regelnde andere Teil 34 der Regeleinrichtung 32 ist in dem Anschlußstück 17 vorgesehen. Beide Teile 33, 34 der Regeleinrichtung 32 sind als sogenannte Kugel-Rückschlagventile ausgebildet und derart angeordnet, daß bei einem Auswärtshub des Kolbens 20 in Richtung des in der Figur nach oben gerichteten Teil des Doppelpfeils A das eine Ventil 33 den Durchfluß zum Spülwasserbehälter 4 freigibt und gleichzeitig das andere 34 den Durchfluß zum Sitzteil sperrt und bei einem Einwärtshub in Richtung des in der Figur nach unten gerichteten Teils des Doppelpfeils A des Kolbens das eine Ventil 33 den Durchfluß zum Spülwasserbehälter 4 sperrt und gleichzeitig das andere 34 den Durchfluß zum Sitzteil freigibt.

Dazu weist die Kugel des einen Teils 33 der Regeleinrichtung 32 einen Außendurchmesser auf, der größer ist als der Innendurchmesser der Spülwasserleitung 5. Der Übergang zwischen dem konisch ausgebildeten Boden 16 des Pumpenkörpers 11 zur Spülwasserleitung 4 ist im Bereich der Innenseite 35 umlaufend abgerundet ausgebildet, so daß die Kugel abdichtend im Bereich der Innenseite 35 anliegen kann.

Das Anschlußstück 17 weist einen mit dem Pumpenkörper 11 verbundenen zylindrischen ersten Abschnitt 36 auf, dessen Innendurchmesser kleiner ist als der Innendurchmesser des sich daran anschließenden zylindrischen zweiten Abschnitts 37. Der Außendurchmesser der Kugel des anderen Teils 34 der Regeleinrichtung 32 ist kleiner als der Innendurchmesser des zweiten Abschnitts 37, aber größer als der Innendurchmesser des ersten Abschnitts 36 des Anschlußstücks 17 ausgebildet. Im Bereich der Innenseite 40 ist der Übergangsbereich zwischen dem ersten und dem zweiten Abschnitt 36,37 des Anschlußstücks 17 abgerundet ausgebildet, so daß auch diese Kugel abdichtend an der Innenseite 40 anliegen kann. Die Kugel ist mittels eines Halteeinsatzes 41 an einem Austritt aus dem zweiten Abschnitt 37 des Anschlußstücks 17 gehindert. Der Halteeinsatz 41 kann auch eine die Kugel in Richtung auf den ersten Abschnitt 36 beaufschlagende Feder aufweisen.

Auf das Außengewinde 13 des Pumpenkörpers 11 ist eine Überwurfmutter 42 aufschraubbar, so daß das nach außen gewölbte freie Ende 43 des Pumpenzylinders 30 beispielsweise mittels einer nicht gezeigten Dichtung flüssigkeitsdicht mit dem freien Ende 12 des Pumpenkörpers 11 verbindbar ist.

Gemäß der Figur ist die Pumpvorrichtung 1 in eine Öffnung 44 des Gehäuses 45 der Toilette 2 so weit einsteckbar, bis die Rastnase 14 die Unterseite des Gehäuses 45 hintergreift und der Anschlag 15 oberhalb des Gehäuses 45 anliegt. In diesem montierten Zustand der Pumpvorrichtung befinden sich das Anschlußstück 17, die Überwurfmutter 42 sowie der Knopf 22 außerhalb des Gehäuses 45 der Toilette 2.

Nachfolgend wird der Betrieb der erfindungsgemäß ausgebildeten Pumpvorrichtung näher erläutert.

Es wird davon ausgegangen, daß die Pumpvorrichtung 1 in die Öffnung 44 des Gehäuses 45 der Toilette 2 eingesteckt und mittels der Spülwasserleitung 5 mit dem Spülwasserbehälter 4 verbunden ist. Es ist auch möglich, die Spülwasserleitung 5 bis nahe des Bodens des Spülwasserbehälters in das Spülwasser 3 einzuführen und diese Leitung gegenüber dem Behälter abzudichten. Das Anschlußstück 17 ist aufnicht dargestellte Weise mit dem nicht gezeigten Sitzteil der Toilette 2 verbunden.

Zum Fördern des Spülwassers 3 aus dem Spülwasserbehälter 4 in den Sitzteil werden Kolbenstange 21 und Kolben 20 mit Hilfe des Knopfes 22 in der Figur nach oben gezogen (vgl. nach oben gerichteter Teil des Doppelpfeils A). Durch diese Aufwärtsbewegung des Kolbens entsteht in den Kammern 7 und 8 der Pumpvorrichtung 1 ein Unterdruck, welcher die Kugel des anderen Teils 34 der Regeleinrichtung 32 zum ersten Abschnitt 36 des Anschlußstücks 17 drückt, dadurch den Durchfluß zum Sitzteil sperrt, und welcher die Kugel des einen Teils 33 der Regeleinrichtung 32 anhebt und das Spülwasser 3 aus dem Spülbehälter 4 in die beiden Kammern 7, 8 der Pumpvorrichtung 1 ansaugt.

Der Kolbenhub befindet sich an seinem oberen Endpunkt, wenn der Kolben 20 an einem inneren Vorsprung 46 der Überwurfmutter 42 anschlägt. In diesem Fall sind die Kammern nahezu vollständig mit dem Spülwaser 3 angefüllt.

Durch die nachfolgende Abwärtsbewegung von Kolben 20 und Kolbenstange 21 (in Richtung des nach unten gerichteten Teils des Doppelpfeils A) wird die Kugel des einen Teils 33 der Regeleinrichtung 32 in Richtung auf die Innenseite 35 beaufschlagt, so daß diese abdichtend die Spülwasserleitung 5 versperrt. Gleichzeitig wird durch den entstehenden Druck in den Kammern die andere Kugel des Rückschlagventils (anderer Teil 34 der Regeleinrichtung 32) von der Innenseite 40 des ersten Abschnitts 36 des Anschlußstücks 17 gelöst und in Richtung auf den Halteeinsatz 41 bewegt, so daß dadurch der Durchfluß durch das Anschlußstück in Richtung des Pfeils B freigegeben wird. Sobald Kolben und Kolbenstange sich an ihrem in der Zeichnung dargestellten unteren Endpunkt befinden, ist der Spülvorgang beendet und kann durch ein erneutes Herausziehen von Kolben und Kolbenstange wiederholt werden.

Dadurch ist eine Toilette, insbesondere eine tragbare Toilette, geschaffen, deren Pumpvorrichtung einfach und sicher handhabbar sowie kompakt ausgebildet und auch hinsichtlich ihres Innenraums ohne weiteres zugänglich ist.

## Patentansprüche

1. Toilette, insbesondere tragbare Toilette für Boote, Wohnwagen oder Reisemobile, mit einem beckenförmigen, eine Abflußöffnung aufweisenden Sitzteil,
einem Spülwasser zum Ausspülen des Sitzteils und dessen Entleerung durch die Abflußöffnung enthaltenden Behälter, einem unter dem Sitzteil befindlichen Aufnahmebehälter und
mit einer mittels einer Regeleinrichtung wahlweise an den Spülwasserbehälter oder an den Sitzteil anschließbaren Pumpvorrichtung zum Fördern des Spülwassers aus dem Spülwasserbehälter in den Sitzteil,
**dadurch gekennzeichnet**
daß die Pumpvorrichtung (1) eine Kolbenpumpe (6) mit mehreren Kammern (7, 8) aufweist, von denen eine erste (7) mit dem Spülwasserbehälter (4) und dem Sitzteil sowie mit einer zweiten Kammer (8) verbunden ist.

2. Toilette nach Anspruch 1, **dadurch gekennzeichnet,** daß die erste Kammer (7) der Kolbenpumpe (6) die zweite, den Kolben (20) der Pumpvorrichtung (1) aufnehmende Kammer (8) konzentrisch unter Ausbildung eines Ringspalts (10) umgibt.

3. Toilette nach Anspruch 1 oder 2, d**adurch gekennzeichnet,** daß die zweite Kammer (8) in ihrem Boden eine Durchtrittsöffnung (31) aufweist, und daß der den Durchfluß zum Spülwasserbehälter (4) freigebende oder sperrende eine Teil (33) der Regeleinrichtung (32) zwischen dem die Durchtrittsöffnung (31) aufweisenden Boden der zweiten Kammer (8) und demjenigen (16) der ersten Kammer (7) angeordnet ist.

4. Toilette nach einem der vorhergehenden Ansprüche, **dadurch gekennzeichnet** daß der den Durchfluß zum Sitzteil freigebende oder sperrende andere Teil (34) der Regeleinrichtung (32) in einem Anschlußstuck (17) vorgesehen ist, das mit dem, dem Boden (16) der ersten Kammer (7) gegenüberliegenden, freien Ende (12) dieser Kammer (7) verbunden ist.

5. Toilette nach einem der vorhergehenden Ansprüche, **dadurch gekennzeichnet**, daß die Regeleinrichtung (32) zwei Kugel-Rückschlagventile (33, 34) aufweist, die derart angeordnet und ausgebildet sind, daß bei einem Auswärtshub des Kolbens (20) das eine Ventil (33) den Durchfluß zum Spülwasserbehälter (4) freigibt und gleichzeitig das andere Ventil (34) den Durchfluß zum Sitzteil versperrt und bei einem Einwärtshub des Kolbens (20) das eine Ventil (33) den Durchfluß zum Spülwasserbehälter (4) sperrt und gleichzeitig das andere Ventil (34) den Durchfluß zum Sitzteil freigibt.

6. Toilette zumindest nach Anspruch 2, **dadurch gekennzeichnet,** daß die Kammern (7, 8) der Pumpvorrichtung (1) zylindrisch ausgebildet sind und die erste Kammer (7) aufihrem freien Ende (12) ein Außengewinde (13) aufweist, auf das eine die zweite Kammer (8) abdichtend mit der ersten Kammer (7) verbindende Überwurfmutter (42) aufschraubbar ist.

7. Toilette zumindest nach den Ansprüchen 4 und 6**, dadurch gekennzeichnet**, daß das den anderen Teil (34) der Regeleinrichtung (32) aufweisende Anschlußstück (17) ebenso wie die Überwurfmutter (42) im montierten Zustand der Pumpvorrichtung (1) außerhalb des Gehäuses (45) der Toilette (2) angeordnet sind.
